# EUROPEAN PATENT SPECIFICATION

(11) **EP 2 744 152 B1**
(45) Date of publication and mention of the grant of the patent: **27.02.2019**
(21) Application number: 13195009.9
(22) Date of filing: 29.11.2013
(51) Int. Cl.: H04L 12/28, H04N 21/25, H04N 21/258, H04N 21/422

(54) **USER TERMINAL APPARATUS, NETWORK APPARATUS FOR ENABLING AN INTELLIGENT COMMUNICATION, AND CONTROL METHOD THEREOF**
ENDGERÄTEVORRICHTUNG UND NETZWERKVORRICHTUNG ZUR ERMÖGLICHUNG DER INTELLIGENTEN KOMMUNIKATION SOWIE DAS STEUERVERFAHREN DAFÜR
APPAREIL DE TERMINAL D'UTILISATEUR ET DISPOSITIF DE RÉSEAU POUR PERMETTRE DE COMMUNICATION INTELLIGENT ST PROCÉDÉ DE COMMANDE DE CELUI-CI

(30) Priority: 14.12.2012 KR 20120146353
(43) Date of publication of application: 18.06.2014
(73) Proprietor: Samsung Electronics Co., Ltd., Gyeonggi-do 443-742 (KR)
(72) Inventor: Lee, Yeon-hee, Seoul (KR); Shim, Jung-hyun, Gyeonggi-do (KR); Kweon, Ji-hyeon, Gyeonggi-do (KR); Park, Mi-ju, Chungcheongbuk-do (KR); Oh, Seok-min, Gyeonggi-do (KR)
(74) Representative: HGF Limited

(56) References cited:
- EP-A1- 2 151 723
- WO-A2-98/59284
- US-A1- 2004 003 073
- US-A1- 2004 163 073

## Description

### CROSS-REFERENCE TO RELATED APPLICATIONS

This application claims the benefit under 35 U.S.C. § 119(a) from Korean Patent Application No. 2012-0146353 filed December 14, 2012 in the Korean Intellectual Property Office.

### BACKGROUND

### 1. Field

The exemplary embodiments relates to a user terminal apparatus, a network apparatus, and a control method thereof. More particularly, the exemplary embodiments relates to a user terminal apparatus, a network apparatus, and a control method thereof that provides user interfaces (UIs) that can control devices through a network.

### 2. Description of the Related Art

Generally, a home network system refers to a network system that enables intelligent communication by performing network matching between a home network disposed in a home and an external communication network. Accordingly, sharing of information resources and usefulness of each product within the home can be maximized through such networking.

Home devices to configure the home network may include information-based devices such as personal computers, facsimile machines, scanners, printers, etc., A/V devices such as TVs, set top boxes, DVDs, VCRs, audios, camcorders, home game consoles, etc., control-based devices such as coffee makers, electric rice cookers, refrigerators, washing machines, microwave ovens, cameras, etc., and dummy devices such as remote controllers, interphones, sensors, lightings, etc.

In addition, portable devices that users can carry are incorporated into the home network system, and thus the portable devices as well as the home devices can be controlled by using the home network system.

The home devices and portable devices are connected to a subnetwork such as telephone lines, wireless local area network (LAN), Bluetooth®, universal serial bus (USB), IEEE 1394, power lines, etc.

Since the home network system can be built with a variety of devices, looking for more convenient ways to control the devices within the home network system is required.

WO-98/59284-A2 discloses a method and apparatus for commanding and controlling diverse home devices connected to a home network. According to the method, sequences of commands which are used to control a home device are stored as a macro to control the home device.

### SUMMARY

The exemplary embodiments has been developed in order to overcome the above drawbacks and other problems associated with the arrangements of the related art. An aspect of the exemplary embodiments relate to providing a network apparatus, and a control method thereof that provide a user interface (UI) that can control devices capable of communication on a network, through a macro.

According to an aspect of the present invention, there is provided a network apparatus including: a communicator arranged to perform communication with a plurality of devices and a user terminal apparatus configured to control the plurality of devices; and a controller arranged to generate control signals to control the plurality of devices based on a user command received from the user terminal apparatus, and control the communicator to transmit the control signals to the plurality of devices, wherein, in response to a predetermined control pattern of the user command to sequentially control the plurality of devices being detected within a predetermined period of time, the controller is arranged to generate and transmit to the user terminal apparatus macro information which corresponds to the detected control pattern.

In response to the predetermined control pattern being repeatedly detected, the controller may generate macro information which corresponds to the detected control pattern.

After a macro which corresponds to the generated macro information being executed according to a user command so that control related to the plurality of devices is performed, in response to a user command for changing a state of at least one of the plurality of devices being received, the plurality of devices may be returned to a state that existed prior to the macro being executed.

In response to there is a plurality of macros related to a predetermined device, and operating time of the predetermined device being overlapped by executing the plurality of macros, the controller may control the predetermined device to follow a macro that is recently executed or is scheduled to be executed from among the plurality of macros.

The communicator may receive at least one of user profile information, information related to usage patterns of the user terminal apparatus, and information related to types of data used through the user terminal apparatus, and the controller may be configured to generate macro information to control, at the same time, or sequentially the plurality of devices based on the received information, and controls to transmit the macro information to the user terminal apparatus.

The user profile information may include gender, age, occupation and contact of the user.

The controller may control so that a macro which corresponds to the generated macro information is automatically activated based on location information of the user terminal apparatus.

The generating macro information may include generating macro information which corresponds to the detected control pattern, in response to the predetermined control pattern is repeatedly detected.

The control method may include returning the plurality of devices to a state prior to the macro being executed, in response to a user command for changing a state of at least one of the plurality of devices being received after a macro corresponding to the generated macro information according to an user command is executed so that control related to the plurality of devices is performed.

The control method may include controlling the predetermined device to follow a macro which is recently executed or scheduled to be executed from among the plurality of macros, in response to there being a plurality of macros related to a predetermined device and the operating time of the predetermined device being overlapped by execution of the plurality of macros.

The control method may include receiving at least one of user profile information, information related to usage patterns of the user terminal apparatus, and information related to types of data used through the user terminal apparatus; and generating macro information to control at the same time or sequentially the plurality of devices based on the received information, and transmitting the macro information to the user terminal apparatus.

The user profile information may include gender, age, occupation and contact of the user.

The control method may include automatically activating a macro which corresponds to the generated macro information based on location information of the user terminal apparatus.

Also disclosed is a network apparatus for controlling a plurality of devices, the apparatus including: a controller configured to generate control signals to control a plurality of devices; wherein, in response to a predetermined control pattern to sequentially control the plurality of devices being detected, the controller generates and transmits macro information which corresponds to the detected control.

The invention is carried out according to the appended independent claims. Optional features of the invention are carried out according to the dependent claims.

The network apparatus may further include a communicator configured to communicate with the plurality of devices and a user terminal apparatus, in order to control the plurality of devices.

The controller may be configured to generate the control signals based on a user command received from the user terminal apparatus.

The generated control signals may control the communicator to transmit the control signals to the plurality of devices. The controller may be configured to generate and transmit the macro information to the user terminal apparatus.

In response to the predetermined control pattern being repeatedly detected, the controller generates macro information which corresponds to the detected control pattern.

The communicator may be configured to receive at least one of user profile information, information related to usage patterns of the user terminal apparatus and information related to types of data used through the user terminal apparatus.

In response to a predetermined control pattern to sequentially control the plurality of devices being detected, the controller may generate and transmit to the user terminal apparatus macro information which corresponds to the detected control pattern.

With various exemplary embodiments of the present disclosure, since devices within a network can be controlled in a more convenient way, the convenience of users may be improved.

Other objects, advantages and salient features of the exemplary embodiments will become apparent from the following detailed description, taken in conjunction with the annexed drawings.

### BRIEF DESCRIPTION OF THE DRAWINGS

These and/or other aspects and advantages of the exemplary embodiments will become apparent and more readily appreciated from the following description, taken in conjunction with the accompanying drawings of which:
FIG. 1 is a view illustrating a network system according to an exemplary embodiment;
FIG. 2 is a block diagram for explaining a configuration of a network apparatus according to an exemplary embodiment;
FIG. 3 is a block diagram for explaining a configuration of a user terminal apparatus according to an exemplary embodiment;
FIG. 4 is a block diagram for explaining a detailed configuration of a user terminal apparatus according to an exemplary embodiment;
FIG. 5 is a view for explaining a configuration of software stored in a storage according to an exemplary embodiment;
FIG. 6 is a view for explaining a method of generating a macro according to an exemplary embodiment;
FIG. 7 is a view for explaining a method of providing UI according to an exemplary embodiment;
FIG. 8 is a view for explaining a method of generating a macro and a UI providing method according to another exemplary embodiment;
FIG. 9 is a view for explaining a method of generating a macro and a method of providing a UI according to another exemplary embodiment;
FIG. 10 is a view for explaining a network control method according to an exemplary embodiment;
FIG. 11 is a view for explaining a method of controlling a network control method according to another exemplary embodiment;
FIG. 12 is a flowchart for explaining a method of controlling a network apparatus according to an exemplary embodiment;
FIG. 13 is a flowchart for explaining a method of controlling a user terminal apparatus according to an exemplary embodiment; and
FIG. 14 is a view for explaining a method of controlling a network system according to an exemplary embodiment.

Throughout the drawings, like reference numerals will be understood to refer to like parts, components and structures.

### DETAILED DESCRIPTION OF THE EXEMPLARY EMBODIMENTS

Hereinafter, certain exemplary embodiments will be described in detail with reference to the accompanying drawings.

The matters defined herein, such as a detailed construction and elements thereof, are provided to assist in a comprehensive understanding of this description. Thus, it is apparent that the exemplary embodiments may be carried out without those defined matters. Also, well-known functions or constructions are omitted to provide a clear and concise description of exemplary embodiments. Further, dimensions of various elements in the accompanying drawings may be arbitrarily increased or decreased for assisting in a comprehensive understanding of the various elements.

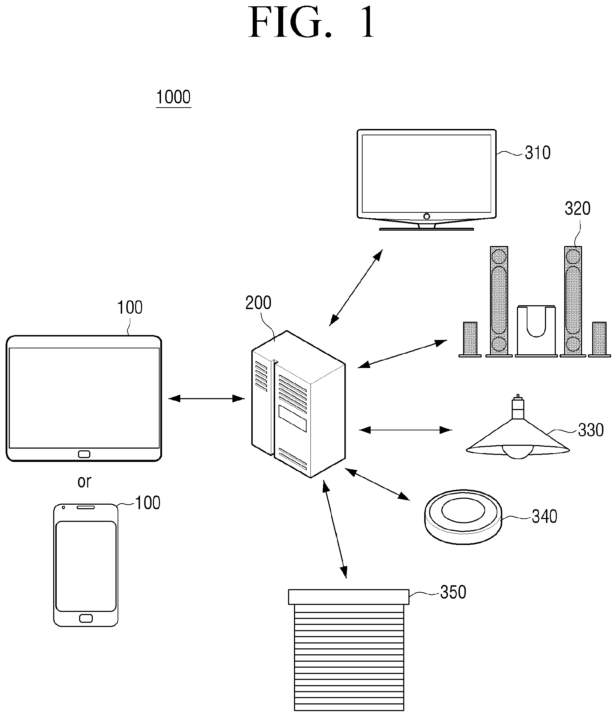

FIG. 1 is a view illustrating a network system according to an exemplary embodiment. Referring to FIG. 1, a network system 1000 may include of a user terminal apparatus 100, a network apparatus 200, and a plurality of devices 310, 320, 330, 340, and 350.

The network system 1000 may be implemented as a home network system that is formed by connecting all electric/electronic appliances used at home as one wired system and/or a wireless system that can perform two-way communication. However, the exemplary embodiments are not limited thereto, and may be applied to systems that can connect and control a plurality of devices through a network. For example, the network system 1000 may include a system that connects and controls devices within a company through a network.

The network apparatus 200 is implemented as a gateway device, a network server, etc., and controls overall operations of the plurality of devices within the network system 1000. In other words, the network apparatus 200 may control operations of devices that can communicate with the network apparatus 200. For example, the network apparatus 200 may be implemented as a home server, a cloud server, etc.

In particular, the network apparatus 200 generates a control command for controlling at least one of the plurality of devices 310, 320, 330, 340, and 350 based on a user command received from the user terminal apparatus 100, and transmits the control command to each device.

Also, the network apparatus 200 may store the control command which corresponds to the user command in order to control the at least one device based on the received user command.

For example, in response to the network system 1000 as illustrated in FIG. 1 being constructed, the network apparatus 200 may store control commands that can control various functions provided by a smart TV 310, a home theater 320, a lighting 330, a robot cleaner 340, and a blind window 350, and transmit to each device a control command which corresponds to the user command. As a more specific example, in response to a user command for changing a volume of the home theater 320 being received from the user terminal apparatus 100, the network apparatus 200 can transmit a control command capable of changing the volume of the home theater 320 which corresponds to the user command, from among the pre-stored control commands to the home theater 320.

The user terminal apparatus 100 receives and transmits the user command to the network apparatus 200 for controlling the devices within the network system 1000. For this, the user terminal apparatus 100 may display a user interface (hereinafter, referred to as UI) for receiving the user commands. Here, the UI may include macro information that represents a macro command for simultaneously controlling, at least two devices from among the plurality of devices 310, 320, 330, 340, and 350 configuring the network system 1000. the "macro" refers to to newly define a plurality of commands that is repeatedly performed as one command.

Items to configure the UI may be changed in various ways depending on the user command received from the user terminal apparatus 100, the types of the plurality of devices 310, 320, 330, 340, and 350 that are connected to the network apparatus 200 and configure the network, etc. These itens will be described later with the accompanying drawings.

The user terminal apparatus 100 that performs the above-described functions may be implemented as a variety of electronic devices that can communicate with other devices and has a display function, such as a smart phone, a tablet computer, a portable multimedia player (PMP), a smart TV, a personal computer (PC), etc.

The plurality of devices 310, 320, 330, 340, and 350 may be implemented as various kinds of devices that can construct the network system 1000. For example, as illustrated in FIG. 1, the devices 310, 320, 330, 340, and 350 may be implemented as the smart TV 310, the home theater 320, the lighting 330, the robot cleaner 340, and the window blind 350. However, this is only one example. Therefore, the devices may be implemented as various types of devices such as air conditioners, heaters, refrigerators, washing machines, air purifiers, monitors, DVD players, smart phones, digital cameras, electronic frames, etc.

The user terminal apparatus 100 and the devices 310, 320, 330, 340, and 350 communicate with the network apparatus 200 through a variety of communication methods, thereby building the network system. For example, the user terminal apparatus 100 and the devices 310, 320, 330, 340, and 350 may build a network system according to a universal plug and play (UPnP) protocol with the network apparatus 200 by using wire/wireless LAN, WAN, Ethernet, Bluetooth®, Zigbee®, universal serial bus (USB), IEEE 1394, WiFi, power line communication (PLC), etc.

On the other hand, in FIG. 1, the user terminal apparatus 100 may exist inside a home like the plurality of devices 310, 320, 330, 340, and 350, but may also exist outside a home. In other words, the user may control operations of the devices 310, 320, 330, 340, and 350 inside a home by using the user terminal apparatus 100. Also, the user may control operations of the devices 310, 320, 330, 340, and 350 outside a home by using the user terminal apparatus 100. For example, the user terminal apparatus 100 may control vehicles, etc. provided outside a home.

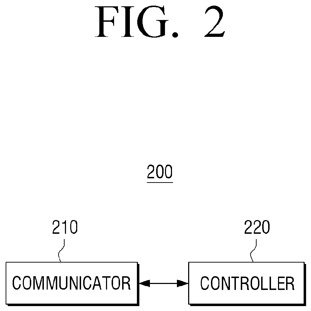

FIG. 2 is a block diagram for explaining configuration of a network apparatus according to an exemplary embodiment. Referring to FIG. 2, the network apparatus 200 includes a communicator 210 and a controller 220.

The communicator 210 performs communication with the plurality of devices. In detail, the communicator 210 may perform communication with the plurality of devices configuring the network system. For example, in the case of the network system 1000 as illustrated in FIG. 1, the communictor 210 may communicate with the user terminal apparatus 100 and the devices 310, 320, 330, 340, and 350.

In particular, the communicator 210 may receive the user command for controlling the devices 310, 320, 330, 340, and 350 from the user terminal apparatus 100, and may transmit to the devices 310, 320, 330, 340, and 350 within the network system 1000 a control command which corresponds to the received user command.

Also, the communicator 210 may receive at least one of user profile information, information related to usage patterns of the user terminal apparatus 100, and information related to types of data being used through the user terminal apparatus 100 from the user terminal apparatus 100. The user profile information may be at least one of gender, age, occupation, address, marital status, number of children, anniversaries and contact of the user. Also, the information related to usage patterns of the user terminal apparatus 100, and the information related to the types of data being used through the user terminal apparatus 100 may be property information of applications that are installed in the user terminal apparatus 100 by the user, property information of contents that are stored in the user terminal apparatus 100 by the user, information related to usage frequency, usage time, and usage place of the user regarding each of functions or contents in the user terminal apparatus 100, etc.

On the other hand, the received information may be used to generate a macro. Detailed description regarding this will be described later.

Also, the communicator 210 may receive information for each of the devices 310, 320, 330, 340, and 350, e.g., information related to type, name, product identification number, etc. of the device from each of the devices 310, 320, 330, 340, and 350 by performing communication with the devices 310, 320, 330, 340, and 350 within the network system. The received information related to each of devices may be used for generation of a macro and control of the device according to activation of the macro.

Also, the communicator 210 may receive information related to a setting state of each of the devices, and the received information related to the setting state of each of the devices may be used to generate the UI to be provided in the user terminal apparatus 100.

On the other hand, in the above-description, the communicator 210 has been described as a single component. However, according to the exemplary embodiments, the communicator 210 may be implemented as a first communicator (not illustrated) to perform communication with the user terminal apparatus 100 and a second communicator (not illustrated) to perform communication with the plurality of devices 310, 320, 330, 340, and 350 are configured separately from each other.

The controller 220 controls overall operations of the network apparatus 200.

In particular, the controller 220 may generate control signals to control the plurality of devices 310, 320, 330, 340, and 350 based on the user command received from the user terminal apparatus 100, and may transmit the generated control signals to the plurality of devices 310, 320, 330, 340, and 350.

Also, in response to the controller 220 detecting a predetermined control pattern to sequentially control at least two devices from among the plurality of devices 310, 320, 330, 340, and 350 based on the user command received from the user terminal apparatus 100, the controller 220 may generate macro information which corresponds to the detected control pattern. For example, in the network system 1000 as illustrated in FIG. 1, in response to a predetermined control pattern to sequentially control the plurality of devices from a state of "the smart TV 310 being off, the home theater 320 is off, and the lighting 330 is on" to a state of "the smart TV 310 is on, the home theater 320 is on, and the lighting 330 is off' is detected, the controller 220 may generate macro information which corresponds to the control pattern of the corresponding devices 310, 320, and 330. In particular, in response to the predetermined control pattern being repeatedly detected, the controller 220 may generate macro information which corresponds to the detected control pattern.

In particular, the controller 220 may allow the macro to be provided to the user through the user terminal apparatus 100 by transmitting the macro information of the detected control pattern to the user terminal apparatus 100. For example, the controller 220 may control so that the macro is provided on the UI of the user terminal apparatus 100 by transmitting macro information to sequentially control the smart TV 310, the home theater 320, and the lighting 330 to the user terminal apparatus 100. In response to the useragreeing to generate the macro through the UI provided on the user terminal apparatus 100, the controller 220 may generate the macro, and may store information related to the generated macro.

After control of the plurality of devices which correspond to the generated macro command is performed, in response to a user command for changing an operation state of at least one of the plurality of devices being received, the controller 220 may return the plurality of devices which correspond to the macro command to the state before the macro command is executed. In the above-described embodiment, if a user command for turning off the smart TV 310 that was turned on by execution of the macro is received, the controller 220 may return the home theater 320 and the lighting 330 to the state that existed prior to execution of the macro, that is, the state of "the home theater 320 is off and the lighting 330 is on."

If there are a plurality of macro commands related to a predetermined device, and operating times of the predetermined device according to the plurality of macro commands are overlapped, the controller 220 may control operation of the predetermined device to follow a macro command that was recently executed or scheduled to be executed from among the plurality of macro commands. For example, in the case of the network system 1000 as illustrated in FIG. 1, it is assumed that operating times of a first macro (the smart TV 310 is on, the home theater 320 is on, and the lighting 330 is off) and a second macro (the lighting 330 is on, and the robot cleaner 340 is on) are overlapped. In this case, in response to the second macro being executed more recently than the first macro, the controller 220 may control the lighting 330, which is applied to both the first macro and the second macro, to be on depending on whether the second macro that was recently executed.

In the above-described exemplary embodiment, only the on/off state of each device is controlled. However, this is only one example. The macro command according to an exemplary embodiment may be set up to control detailed items related to operations of each device as well as the on/off state of the each device. For example, the first macro may be set up as "the smart TV 310 is on and volume 12, the home theater 320 is on, and the brightness level of the lighting 330 is 1."

On the other hand, the communicator 210 may receive the user profile information from the user terminal apparatus 100. The user profile information may be at least one of gender, age, occupation, and contacts of the user. The controller 220 may propose a macro for controlling at the same time or sequentially two or more devices based on the user profile information received from the user terminal apparatus 100 to the user through the user terminal apparatus 100. For example, in response to the user being a housewife in her 40s, a macro related to cleaning suitable for the user may be proposed.

The controller 220 may receive the information related to usage patterns of the user regarding the user terminal apparatus 100, and the information related to the types of data being collected through the user terminal apparatus 100 from the user terminal apparatus 100. For example, in response to music-related applications being used a lot or music-related data are searched a lot thorough the user terminal apparatus 100, a macro related to listening to music may be proposed.

Information related to the macros being provided based on the user profile information, the information related to usage patterns, the information related to the types of data being collected through the user terminal apparatus 100, etc. may be previously stored in the network apparatus 200, or may be collected periodically or in real time from external devices. For example, the network apparatus 200 may be implemented in the form of storing related information when building the network. Alternatively, the network apparatus 200 may be implemented to store or update the related information by receiving information from external severs (not illustrated).

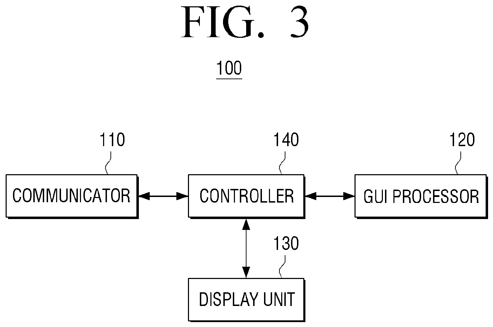

FIG. 3 is a block diagram for explaining configuration of a user terminal apparatus according to an example. Referring to FIG. 3, the user terminal apparatus 100 includes a communicator 110, a GUI processor 120, a display 130, and a controller 140.

The communicator 110 performs communication with the network apparatus 200. For example, the communicator 110 may perform communication with the network apparatus 200 by using wire/wireless LAN, WAN, Ethernet, Bluetooth®, Zigbee®, universal serial bus (USB), IEEE 1394, WiFi, power line communication (PLC), etc. For this, the communicator 110 may include a chip or an external input port which corresponds to each communication method.

The communicator 110 may receive from the network apparatus 200 information related to the plurality of devices 310, 320, 330, 340 and 350.

In particular, the communicator 110 may receive macro information for controlling sequentially or at the same time, the plurality of devices. In this case, the macro information may be information that is automatically generated in the network apparatus 200 according to a predetermined control pattern of the user terminal apparatus 100 to control sequentially at least two of the plurality of devices. Also, the macro information may be information generated in the network apparatus 200 or information selected among macro information that was pre-stored in the network apparatus 200 based on at least one of the user profile information, the information about usage patterns of the user terminal apparatus 100, and the information related to the types of data being used through the user terminal apparatus 100 received from the user terminal apparatus 100.

The GUI processor 120 performs a function to generate UIs based on information received from the network apparatus 200.

In particular, the GUI processor 120 may generate an UI including macro information for controlling the plurality of devices sequentially or at the same time, based on the information received from the network apparatus 200.

In this case, the user terminal apparatus 100 may receive only macro information for configuring the UI from the network apparatus 200, and may generate the UI by using a previously stored UI format. In some cases, the user terminal apparatus 100 may receive also the UI format information from the network apparatus 200. For example, the GUI processor 120 may select a previously stored UI format suitable for the macro information received from the network apparatus 200, and may then generate a UI by combining the selected UI format and the received macro information. However, the received macro information may be stored in the user terminal apparatus 100, and thus may be used when later generating the same or a similar UI.

Here, the UI may include information related to a macro name, a device name corresponding to a macro, a control state of a device, macro execution time, etc. Also, the UI may include an item to receive a user command for activating and/or deactivating a specific macro. Also, the UI may include an explanation for the macros, information of a category to which each macro belongs, etc. Detailed explanation for items configuring the UI will be described later with reference to drawings.

The display 130 displays various screens. In particular, the display 130 may display the UIs generated in the GUI processor 120. The display 130 may be implemented as a liquid crystal display (LCD) panel, an organic light emitting diode (OLED), etc., but is not limited thereto.

On the other hand, the display 130 may be implemented in the form of a touch screen formed as a layer structure with a touch pad. In this case, the display 130 may be used as a user interface (not illustrated) for receiving various user commands in addition to the output device. Here, the touch screen may be configured to detect touch input pressure as well as touch input location and area. In this case, the display 130 may receive a user command for activating or deactivating the macro.

The controller 140 controls overall operations of the user terminal apparatus 100.

In particular, the controller 140 may control the GUI processor 120 and the display 130 to generate an UI including macro information received from the network apparatus 200, and to display the generated UI.

The controller 140 may transmit a user command which consents to the generation of the macro proposed through the displayed UI to the network apparatus 200. In this case, the network apparatus 200 may automatically generate and store the macro accepted by the user, based on the received user command.

The controller 140 may transmit a user command for executing the macro inputted through the displayed UI to the network apparatus 200. In this case, the network apparatus 200 may control operating states of the plurality of devices which correspond to the user command so that the plurality of devices becomes the states set by the macro. Here, the operating state of the device may include detailed operations of the device as well as on/off state of the device.

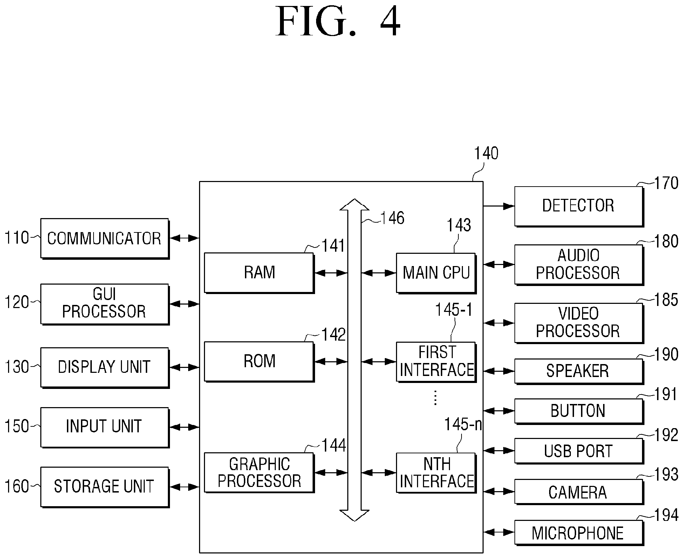

FIG. 4 is a block diagram for explaining detailed configuration of a user terminal apparatus according to an exemplary embodiment. Referring to FIG. 4, the user terminal apparatus 100' includes a communicator 110, a GUI processor 120, a display 130, a controller 140, an input 150, a storage 160, a detector 170, an audio processor 180, a video processor 185, a speaker 190, a button 191, a USB port 192, a camera 193 and a microphone 194. Detailed descriptions with respect to components that are illustrated in FIG. 4 and overlapped with the components illustrated in FIG. 3 will be omitted.

The input 150 receives a variety of user commands. In particular, the input 150 may receive a user command for selecting a macro through the UI provided on the display 130 and a user command for activating or deactivating the selected macro.

The input 150 may be implemented in the form of a touch screen to receive touch input, or may be implemented as key buttons, a keypad, etc. In response to the user terminal apparatus 100being implemented as a digital TV, the input 150 may be implemented to receive commands to be transmitted from a remote control device (not illustrated) such as a remote controller.

On the other hand, the operations of the controller 140 as described above may be performed by programs stored in the storage 160. The storage 160 may store an operating system software module for driving the user terminal apparatus 100, various kinds of applications, various kinds of data that are input or set during execution of applications, contents, etc.

The storage 160 may store the user profile information such as gender, age, occupation, phone number, address, marital status, number of children and anniversaries of the user.

The storage 160 may store a variety of information related to usage patterns of the user terminal apparatus 100. For example, the storage 160 may store a variety of information related to usage of the user terminal apparatus 100 such as property information of media files and applications that are installed by the user, information related to usage frequency, usage places, and usage time of the user regarding each of functions of the user terminal apparatus 100, content search information, etc.

Also, the storage 160 may store information collected by sensors within the user terminal apparatus 100 or information that is regenerated by the information. For example, the storage 160 may store GPS information, gyro information, temperature information, humidity information, illumination information, speed information, noise information, etc. that are collected by the various sensors. The storage 160 may store sleep pattern information generated through information collected by a gyro sensor and a sound sensor.

The storage 160 may include at least one type of storage media of flash memory type, hard disk type, multimedia card micro type, card type memory (e.g., SD memory or XD memory), RAM, and ROM.

In addition, various software modules stored in the storage 160 will be described with reference to drawings.

The detector 170 can detect various operations for the user terminal apparatus 100 such as touch, motion, rotation, tilting, pressure, access, etc.

Also, the detector 170 may detect environmental information for the user terminal apparatus 100. For example, the detector 170 may detect GPS information, gyro information, temperature information, humidity information, illumination information, speed information, and noise information of the user terminal apparatus 100.

In particular, the detector 170 may include touch sensors to detect touch. The touch sensor may be implemented as a capacitive touch sensor or as a resistive touch sensor. The capacitive touch sensor calculates touch coordinates by detecting micro electric excited by the user's body when any part of the user's body is touched on the surface of the display 130 by using the dielectric coated on the surface of the display 130. The resistive touch sensor includes two electrode plates, and, when the user touches the screen, calculates touch coordinates by detecting current flowing by the top and bottom plates being in contact with each other at a touched point. As described above, the touch sensor may be implemented in a variety of shapes.

In addition, the detector 170 may include a geomagnetic sensor, a gyro sensor, an acceleration sensor, etc. for detecting user's motions for the user terminal apparatus 100, movement of the user terminal apparatus 100, etc. Here, the geomagnetic sensor detects a rotation state and a moving direction of the user terminal apparatus 100, the gyro sensor detects a rotation state of the user terminal apparatus 100, and the acceleration sensor detects an inclination of the user terminal apparatus 100.

Also, the detector 170 may include a temperature sensor, a humidity sensor, an illumination sensor, a sound sensor, etc. In addition, although not illustrated, the detector 170 may include a GPS receiver (not illustrated) that calculates a current location of the user terminal apparatus 100 by receiving GPS signals from global positioning system (GPS) satellites.

The audio processor 180 performs a process for audio data. The audio processorl80 may perform various processes such as decoding, amplifying, noise filtering, etc. for the audio data.

The video processor 185 performs a process for video data. The video processor 185 may perform various image processes such as decoding, scaling, noise filtering, frame rate conversion, resolution conversion, etc. for the video data.

The speaker 190 outputs various notification sounds or voice messages as well as various audio data processed in the audio processor 180.

The button 191 may be various types of buttons such as mechanical buttons, a touch pad, a wheel, etc. that are formed on any area of a front surface, side surfaces, or a rear surface of a main body of the user terminal apparatus 100. For example, a button for turning on/off the power of the user terminal apparatus 100 may be provided.

The USB port 192 may perform charging, communication with various external devices, etc. through an USB cable.

The camera 193 may capture still images or videos according to the control by the user. The camera 193 may be implemented as multiple cameras including a front camera, and a rear camera.

The microphone 194 is a component to receive user voice or other sounds and convert them into audio data. The controller 140 may use the user voice inputted through the microphone 194 in a process of call or may convert the user voice into audio data, and then store the audio data in the storage 160.

In response to the camera 193 and the microphone 194 being provided, the controller 140 may perform control operations depending on the user voice inputted through the microphone 194 or user motion recognized by the camera 193. In other words, the user terminal apparatus 100 may be operated in a motion control mode or in a voice control mode. If the terminal apparatus is operated in the motion control mode, the controller 140 activates the camera 193 to capture the user, tracks motion change of the user, and performs a control operation corresponding toto the user. In response to being operated in the voice control mode, the controller 140 analyzes user voice inputted through the microphone 194, and may operate as a voice recognition mode that performs control operation according to the analyzed user voice. For example, in response to an answer to a question being inputted as a specific motion or a specific voice, the controller 140 can detect an answer which corresponds to the specific motion or specific voice.

In addition, various types of external input ports for connecting to various types of external terminals, such as a headset, a mouse, etc., may be included.

On the other hand, the controller 140 controls overall operations of the user terminal apparatus 100 by using various programs stored in the storage 160. For example, the controller 140 may perform a macro providing service according to an exemplary embodiment by executing an application stored in the storage 160. In other words, the UI providing service according to an exemplary embodiment may be implemented in the form of an application of software that the user directly uses on an operating system. Also, the application may be provided in the form of an icon interface on the screen of the user terminal apparatus 100, but is not limited thereto.

In detail, the controller 140 may includes a RAM 141, a ROM 142, a main CPU 143, a graphic process unit 144, first to nth interfaces 145-1 to 145-n, and a bus 146.

The RAM 141, the ROM 142, the main CPU 143, the graphic processor 144, the first to nth interfaces 145-1 to 145-n may be connected to each other through the bus 146.

The first to nth interfaces 145-1 to 145-n are connected to various types of components as described above. One of the interfaces may be a network interface that is connected to an external device through the network.

The main CPU 143 accesses the storage 160, and performs booting by using the operating system stored in the storage 160. Then, the main CPU 143 performs various operations by using various types of programs, contents, data, etc. stored in the storage 160.

The ROM 142 stores command sets for the system booting. If a turn-on command is input and the power is supplied, the main CPU 143 copies the operating system stored in the storage 160 into the RAM 141 according to commands stored in the ROM 142, and execute the operating system, thereby booting the system. After the booting is completed, the main CPU 143 copies various application programs stored in the storage 160 into the RAM 141, and executes the application programs copied in the RAM 141, thereby performing various operations.

The graphic processor 144 generates screens including various objects, such as icons, images, texts, etc., by using a calculation unit (not illustrated) and a renderer (not illustrated). The calculation unit (not illustrated) calculates property values, such as a coordinate value, a shape, a size, a color, etc., of each object according to a layout of the screen. The renderer (not illustrated) generates a variety of screen layouts including objects based on the property values calculated in the calculation unit (not illustrated). The screen generated in the renderer (not illustrated) is displayed in a display area of display 130.

On the other hand, FIG. 4 illustrates an example of detailed configuration included in the user terminal apparatus 100. According to an exemplary embodiment, some of the components illustrated in FIG. 4 may be omitted or changed. Alternatively, other component may be added in the configuration of the FIG. 4. For example, a digital multimedia broadcasting (DMB) receiver (not illustrated) that receives and processes DMB signals may be included therein.

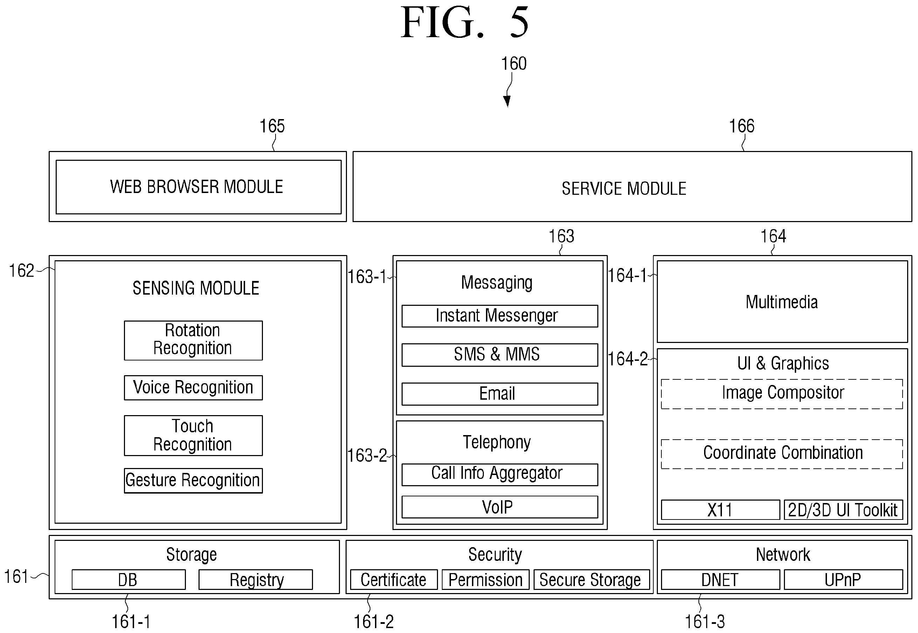

FIG. 5 is a view for explaining configuration of software stored in a storage unit according to an example.

Referring to FIG. 5, the storage 160 may store software including a base module 161, a sensing module 162, a communication module 163, a presentation module 164, a web browser module 165 and a service module 166.

The base module 161 refers to a basic module that processes signals being transmitted from hardware contained in the user terminal apparatus 100, and then sends the processed signals to an upper layer module. The base module 161 includes a storage module 161-1, a security module 161-2, and a network module 161-3. The storage module 161-1 is a program module to manage data bases or registries. The main CPU 143 may access the data bases within the storage 160 by using the storage module 161-1, and then may read various data. The security module 161-2 is a program module that supports certification, permission, secure storage, etc. for the hardware. The network module 161-3 is a module to support network connection, and includes a DNET module, an UPnP module, etc.

The sensing module 162 is a module that collects information from the various types of sensors, and analyses and manages the collected information. The sensing module 162 may include a face recognizing module, a voice recognizing module, a gesture recognizing module, etc.

The communication module 163 is a module configured to perform communication with the outside. The communication module 163 may include a massaging module 163-1, such as messenger programs, short message service (SMS) & multimedia message service (MMS) programs, e-mail programs, etc., and a call module 163-2 including a call information aggregator program module, a VoIP module, etc.

The presentation module 164 is a module for configuring the display screen. The presentation module 164 may include a multimedia module 164-1 that plays back and outputs the multimedia contents, and an UI rendering module 164-2 that performs UI and graphic processes. The multimedia module 164-1 may include a player module, a camcorder module, a sound process module, etc. Accordingly, the multimedia module 164-1 performs operations to generate and play screen and sound by playing back various multimedia contents. The UI rendering module 164-2 may include an image compositor module to compose images, a coordinates-combination module that combines and generate coordinates of the screen at which images will be displayed, an X11 module to receive various types of events from hardware, a 2D/3D UI tool kit to provide tools for configuring UIs in the form of two dimension (2D) or three dimension (3D), etc. For example, the UI rendering module 164-2 may be used in configuring various UIs related to missions.

The web browser module 165 refers to a module to access web servers by performing web browsing. The web browser module 165 may include various modules such as a web view module to configure a web page, a download agent module to perform download, a bookmark module, a web kit module, etc.

The service module 166 is a module including various types of applications for providing a variety of services. In detail, the service module 166 may include various types of program modules, such as navigation programs, content playing programs, game programs, e-book programs, calendar programs, alarm management programs, other widgets, etc., in addition to the UI providing program according to an exemplary embodiment. For example, the service module 166 may include a service program to provide an UI for setting usage conditions of electronic keys according to an exemplary embodiment.

FIG. 5 illustrates various types of program modules. However, some of the illustrated various types of program modules may be omitted, modified, or added depending on the type and characteristic of the user terminal apparatus 100. For example, it may be implemented to include a location-based module that supports a location-based service in conjunction with hardware such as a GPS chip.

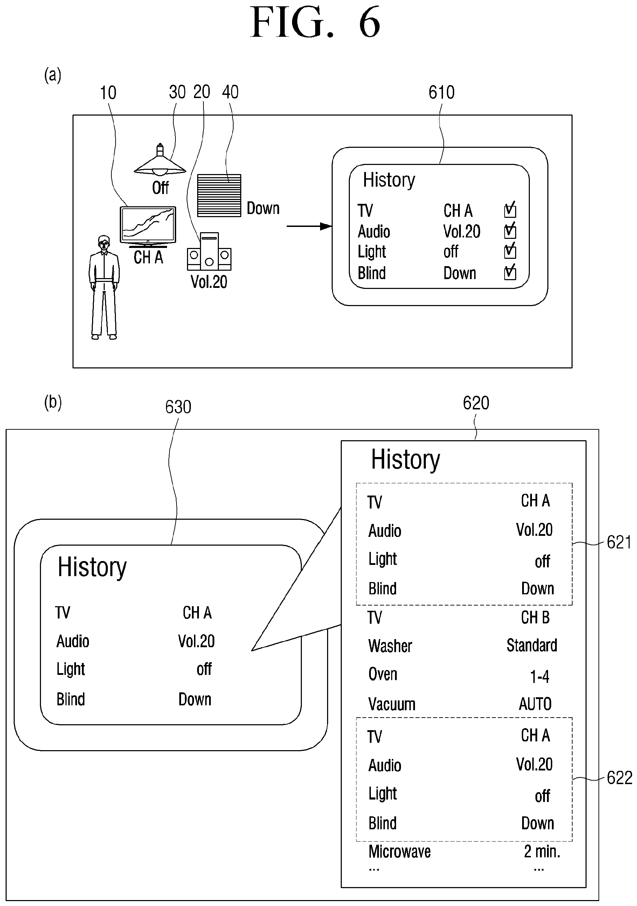

FIG. 6 is a view for explaining a method of generating a macro according to an example.

As illustrated in FIGS. 6A and 6B, the network apparatus 200 may recognize a control pattern of the user with respect to the plurality of devices, and then may generate a macro which corresponds to the control pattern.

As illustrated in FIG. 6A, it is assumed a case that the user performs a set of control operations of turning on a TV 10, tuning the channel A, and setting a volume of an audio 20 to 20 after turning off a lighting 30 of a living room, and pulling down blinds 40 in order to watch a drama.

In response to the set of control operations occurring within a predetermined period of time, the network apparatus 200 may look up a home appliances control history list in order to make a set of appliance control processes that the user has just conducted into one macro. In this case, the network apparatus 200 may make a corresponding macro by selecting a control list 610 for the corresponding home appliances from the appliances control history list.

Also, as illustrated in FIG. 6B, home appliances that the user usually controls and contents of function controls thereof may be recorded in the appliance control history 620. In this case, if the network apparatus 200 recognizes control patterns 621 and 622 that perform the same function about the same device in the appliance control history 620, the network apparatus 200 may make the corresponding control pattern 630 into a macro or propose to make the corresponding control pattern 630 into a macro to the user. In particular, the network apparatus 200 may allow the generation of the macro related to the corresponding control pattern to be proposed on the UI of the user terminal apparatus 100 by transmitting to the user terminal apparatus 100 information related to the corresponding control pattern. In this case, in response to the user agreeing to the generation of the macro, the corresponding macro is automatically generated, and the information may be stored in the user terminal apparatus 100 and/or the network apparatus 200.

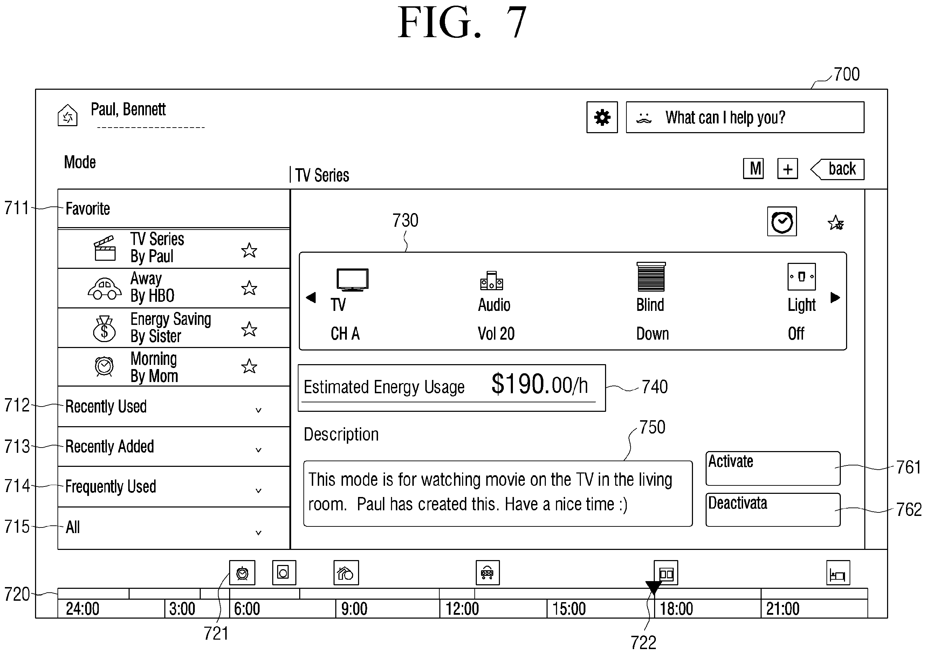

FIG. 7 is a view for explaining a UI providing method according to an exemplary embodiment.

As illustrated in FIG. 7, an UI 700 including macro information that is proposed according to the control pattern of the user may be provided on the user terminal apparatus 100.

The UI 700 may include items 711, 712, 713, 714, and 715 which represent a plurality of categories that contains a variety of pre-stored macro information. For example, "Favorite category 711" may include a variety of macro information that are favorites of the user.

Also, the UI 700 may include an item of a time bar 720 that represents reserved macros by the time. In this case, the reserved macros may be displayed as icons 721 to identify the corresponding macros. Also, a GUI 722 indicating the current time may be displayed in the time bar 720.

In addition, the UI 700 may include macro information 730 that is generated or proposed according to the device control pattern of the user. For example, the UI 700 may include the macro that is generated or proposed in the form of an exemplary embodiment as illustrated in FIG. 6. Alternatively, although not illustrated, when generation of the corresponding macro is proposed, a menu item (e.g., "acceptance" or "rejection") for receiving the consent of the user may be included.

Also, the UI 700 may include a variety of additional information related to the generated or proposed macros. For example, the additional information such as power consumption 740 estimated by execution of the corresponding macro, the description 750 for the corresponding macro may be displayed.

Also, the UI 700 may include an item 761 for activating a macro selected by or proposed to the user, and an item 762 for deactivating the activated macro.

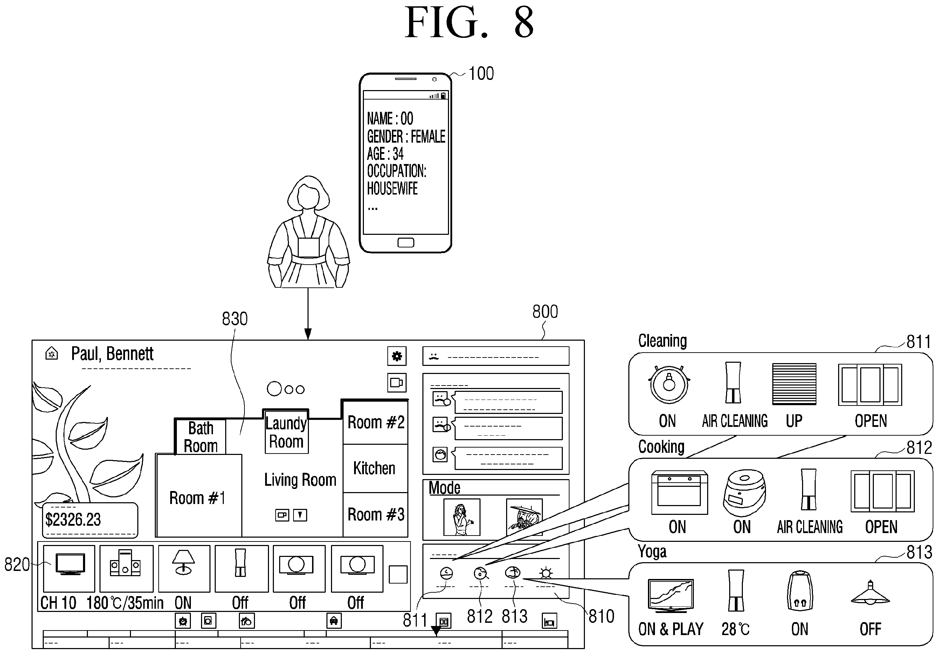

FIG. 8 is a view for explaining a macro generating method and a method of providing a UI according to another exemplary embodiment.

As illustrated in FIG. 8, a macro may be automatically generated or generation of the macro may be proposed based on the user profile information. In this case, the user profile information may be received from the user terminal apparatus 100, but is not limited thereto. For example, the user profile information may be received from an external server (a SNS server, etc.).

On the other hand, upon obtaining the user profile information, the macro may be automatically generated, or generation of the macro may be proposed to the user based on the obtained user profile information. For example, in response to the user profile information being "gender: female, age: 30s, occupation: housewife," the network apparatus 200 may search macros that housewives under 40 years prefer among macros that can be configured by home appliances that exist in the user's home. In this case, information about the macro that can be configured by various home appliances may be pre-stored in the network apparatus 200 or may be received from an external server.

Then, the network apparatus 200 may propose the searched macro to the user through the user terminal apparatus 100. As illustrated in FIG. 8, the searched macros may be provided in a predetermined area 810 of the UI 800. For example, macros such as a cleaning macro (a robot cleaner is on, air cleaning function of an air conditioner is on, blinds are up, and a window is open) 811, a cooking macro (a smart oven is on, an electric rice cooker is on, air cleaning function of an air conditioner is on, a window is open) 812, a yoga macro (TV is on, a yoga video stored in a gateway is played, temperature of the air conditioner is maintained 28 degrees centigrade, and lighting is off) 813, etc. may be proposed.

In addition, the UI 800 may include an item 820 for indicating current states of home appliances provided in the home, an item 830 for representing a spatial layout inside the home, etc.

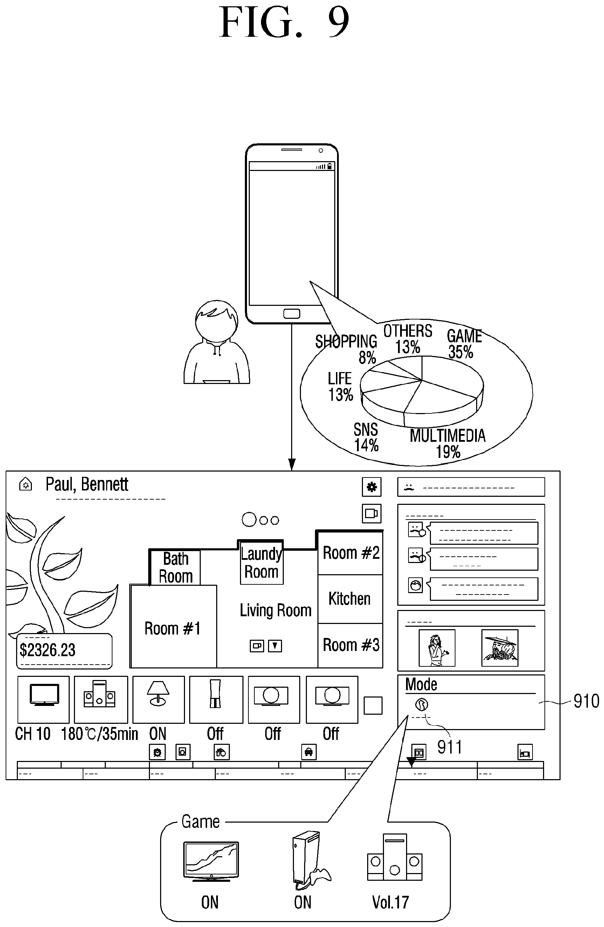

FIG. 9 is a view for explaining a method of generating a macro and a method of providing a UI according to still another example.

As illustrated in FIG. 9, a macro may be automatically generated or generation of the macro may be proposed based on the information related to usage patterns of the user regarding the user terminal apparatus 100. In this case, the information related to usage patterns of the user terminal apparatus 100 may be received from the user terminal apparatus 100.

On the other hand, in response to information related to usage patterns of the user terminal apparatus 100 being obtained, the macro may be automatically generated or the generation of the macro may be proposed to the user based on the obtained information. For example, if categories of applications installed in the user terminal apparatus 100 and user's utilization ratio for each of the categories are "game 35%, multimedia 19%, SNS 14%, life 13%, shopping 8%, and others 11%," the network apparatus 200 determines that the user is interested in games, and may provide game-related macros in a certain area 910 of an UI 900 provided on the user terminal apparatus 100. For example, a game macro such as "TV is on, a speaker volume is 17, and a game console is on" may be provided.

However, the exemplary embodiments are not limited thereto. A variety of information related to the user may be collected through external servers such as a SNS server. For example, if the network apparatus 200 is linked to the SNS server (not illustrated), information generated based on various usage patterns, such as collecting contents, posting, etc., in the corresponding server may be collected. The information collected by such method may be used for the network apparatus 200 to generate or propose the macros in the same manner as described above.

On the other hand, in the above description, the user profile information and the information related to the usage patterns of the user terminal apparatus are used separately. However, this is only one example. According to another exemplary embodiment, the information may be used in combination.

For example, in response to the profile information of a user A being "male, 20s, student, single," and a function that has been most frequently used in the user terminal apparatus of the user A is a multimedia-related function (especially, a music content-related function), a corresponding macro may be proposed through the user terminal apparatus or through the corresponding macro which may be automatically generated.

Also, in some cases, the generated macro may be automatically activated based on the location of the user A. For example, in response to the GPS information of the user terminal apparatus of the user A being close to the home of user A, a macro of "lights of an entrance, a living room, and a user's room are on, and an audio in the user's room is power on & vol. 20 & music playback" may be executed.

Also, in response to the profile information of a user B is "female, 40s, office worker, married, having children," and a function that has been most frequently used in the user terminal apparatus of the user B is call and message functions, a corresponding macro may be proposed through the user terminal apparatus or the corresponding macro may be automatically generated. In some cases, the generated macro may be activated automatically based on the location of the user B. For example, in response to the GPS information of the user terminal apparatus of the user B being close to home of the user B, a macro of "lights of an entrance, a living room, and an inner room are on, a notification setting of the user terminal is changed from vibration to sound & a volume thereof is adjusted to a maximum level, and a coffee pot is on" may be executed.

Also, in the case where the profile information of a user C is "female, 20s, office worker," and a function that has been most frequently used in the user terminal apparatus of the user C is watching DMB dramas (mainly, watching of a drama that is aired on channel A at 10:00 pm of Wednesday and Thursday), in response to a determination that the location of the user terminal apparatus is at the user's home at 9:50 pm of Wednesday and Thursday, the corresponding macro may be automatically executed. For example, a macro of "a TV in a living room is on & channel A & volume 17, and lighting brightness of the living room is 50%" may be executed.

As described above, since a user is identified through a user terminal apparatus which the user individually owns and home appliances control macros customized to the user are offered to the user, macro usage frequency of the user may be increased.

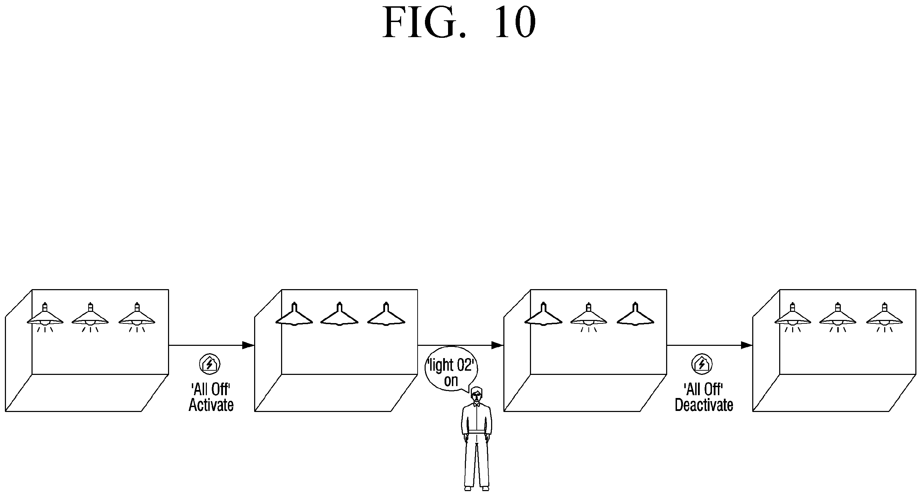

FIG. 10 is a view for explaining a method of controlling a network according to an exemplary embodiment.

According to an exemplary embodiment, in a state that a predetermined macro is activated, in response to one of a plurality of devices which correspond to the macro being controlled as an operation opposite to the operation which corresponds to the macro, the devices which correspond to the macro may be returned to the state they were in by deactivating the macro prior to the macro being activated.

For example, as illustrated in FIG. 10, it is assumed that in the state where all lightings within a home are on, a macro to turn off all the lights is executed. In this case, in response to the user turning on one (light 02) of the lightings, the macro is deactivated, and then all the lights are controlled to be to be in an on state prior to the macro being executed.

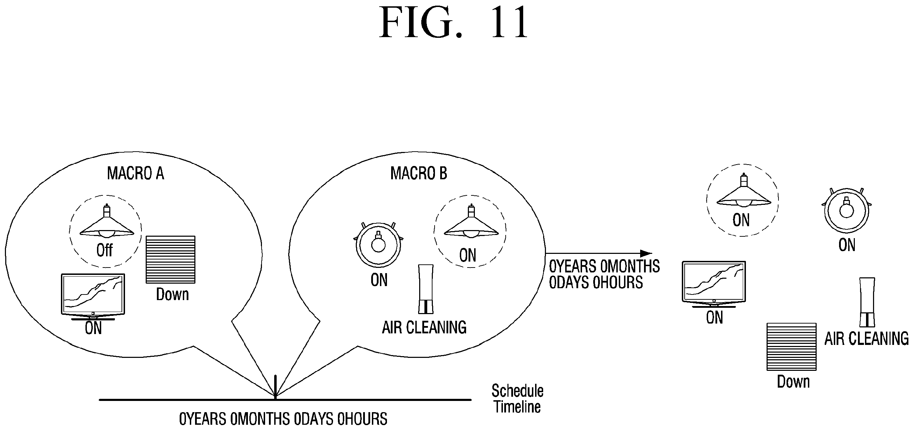

FIG. 11 is a view for explaining a method of controlling a network according to another exemplary embodiment.

According to another example, if there are a plurality of macros associated with a predetermined device, and operating times of the predetermined device may be overlapped depending on execution of the plurality of macros which are overlapped, the operation of the predetermined device may be controlled to follow a macro that is recently executed or is scheduled to be executed from among the plurality of macros.

For example, as illustrated in FIG. 11, in the case that macro A and macro B are scheduled to be run at the same time (0years, 0month, 0days, 0hours), the macro A is set so that the lighting is turned on, and the macro B is set so that the lighting is turned off, the operation of the lighting may be controlled to follow the macro B that is scheduled more recently than the macro A. In other words, the lighting may be controlled to be turned on at 0years, 0month, 0days, 0hours according to the macro B.

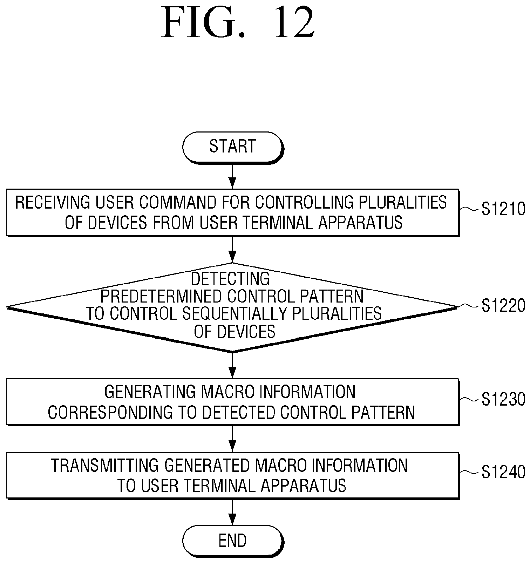

FIG. 12 is a flowchart for explaining a method of controlling a network apparatus according to an exemplary embodiment.

According to a method of controlling a network apparatus as illustrated in FIG. 12, a user command to control a plurality of devices is received from a user terminal apparatus (S1210).

In response to a predetermined control pattern to sequentially control the plurality of devices based on the received user command being repeatedly detected (S1220:Y), macro information which corresponds to the detected control pattern is generated (S1230).

Next, the generated macro information is transmitted to the user terminal apparatus (S1240).

In this case, in the S1230 of generating the macro information, in response to the predetermined control pattern being repeatedly detected, macro information which corresponds to the detected control pattern may be generated.

After the macro which corresponds to the generated macro information according to the user command is executed so that control related to the plurality of devices is performed, if a user command for changing a state of at least one of the plurality of devices is received, the plurality of devices may be returned to the state they were in prior to the macro being executed.

If there are a plurality of macros related to a predetermined device and an operating time of the predetermined device according to execution of the plurality of macros is overlapped, the operation of the predetermined device may be controlled to follow a macro that is more recently executed or scheduled from among the plurality of macros.

If at least one of the user profile information, information related to usage patterns of the user terminal apparatus, and information related to the types of data used through the user terminal apparatus is received from the user terminal apparatus, macro information for controlling at the same time or sequentially controlling the plurality of devices based on the received information may be generated and transmitted to the user terminal apparatus.

Here, the user profile information may be at least one of gender, age, occupation and contact of the user.

Also, a macro which corresponds to the generated macro information based on the location information of the user terminal apparatus may be automatically activated.

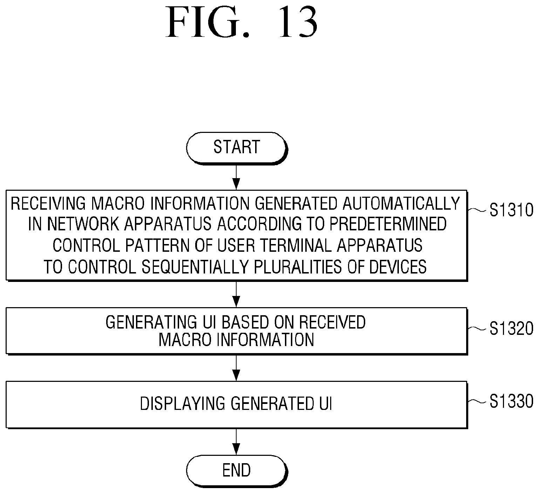

FIG. 13 is a flowchart for explaining a method of controlling a user terminal apparatus according to an exemplary embodiment.

According to a method of controlling a user terminal apparatus as illustrated in FIG. 13, macro information that is automatically generated in a network apparatus, according to a predetermined control pattern of a user terminal apparatus, in order to sequentially control a plurality of devices, is received from the network apparatus (S1310).

Then, an UI is generated based on the received macro information (S1320).

After that, the generated UI is displayed (S1330).

Also, at least one of user profile information, information related to usage patterns of the user terminal apparatus, and information related to the types of data used through the user terminal apparatus may be transmitted to the network apparatus. In this case, the network apparatus can generate macro information based on the information received from the user terminal apparatus, and, in response to the macro information generated in the network apparatus being received, the user terminal apparatus may generate an UI including the received macro information.

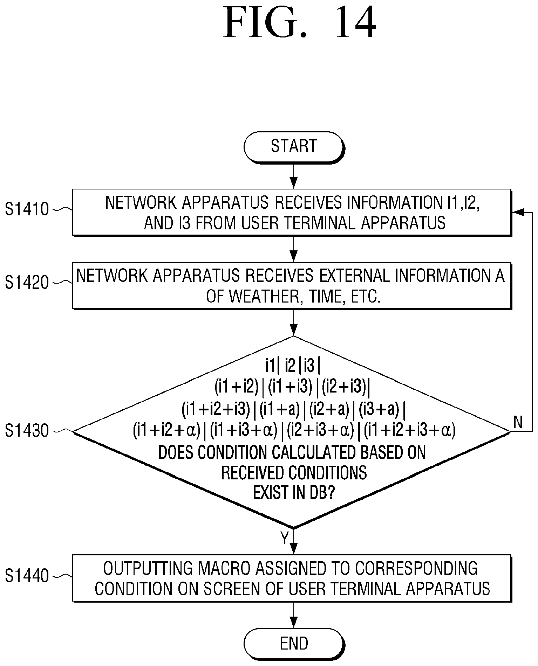

FIG. 14 is a view for explaining a method of controlling a network system according to another example.

According to a method of controlling a network system as illustrated in FIG. 14, a network apparatus receives a variety of information i1, i2, and i3 from a user terminal apparatus (S1410). Here, i1, i2 and i3 may be at least one of user profile information, information related to usage pattern of a user terminal apparatus, and information related to types of data used through the user terminal apparatus.

Also, the network apparatus receives external information a such as weather, time, etc. (S1420)
a determination is then made as to whether a predetermined condition that is calculated based on the external information a and the information i1, i2 and i3 received from the user terminal apparatus exists in a condition database (DB) (S1430). The calculated predetermined condition may be, for example, a condition considering each of i1, i2, and i3, a condition considering at least two of i1, i2, and i3, a condition considering both the a and each of i1, i2, and i3, a condition considering both the a and at least two of the i1, i2, and i3, etc.

In response to the predetermined condition being in the condition database (S1430:Y), macro information assigned to the corresponding condition is outputted on a screen of the user terminal apparatus (S1440). In this case, the relationship between the conditions and macros may be stored a data base that is provided in a home server, a cloud server, etc.

As described above, according to exemplary embodiments, since user customized macros can be automatically generated and provided, the convenience of users may be improved.

Also, a non-transitory computer-readable storage medium in which a program to sequentially perform a method of providing a UI and a control method according to an exemplary embodiment may be provided.

For example, a non-transitory computer-readable storage medium in which a program to perform a step of, generating macro information which corresponds to the detected control pattern, and a step of transmitting the generated macro information to the user terminal apparatus may be provided.

This occurs when a user command for controlling a plurality of devices is received from a user terminal apparatus and a predetermined control pattern to sequentially control the plurality of devices based on the received user command is repeatedly detected.

Contrary to a medium to store data for a short period of time, such as a register, a cache, a memory, etc., the non-transitory computer-readable storage medium refers to a medium that can store data in a semi-permanent manner and that can be read by devices. In detail, the above-described various applications or programs may be stored in and provided with the non-transitory computer readable medium such as a CD, a DVD, a hard disc, a Blu-ray disc, an USB, a memory card, a ROM, etc.

Also, in the block diagram that illustrates the user terminal apparatus, a bus is not illustrated, but communication between components of the user terminal apparatus may be performed through the bus. Also, the user terminal apparatus may include a processer to perform various steps as described above, such as a CPU, a micro processer, etc.

While the exemplary embodiments have been described, additional variations and modifications of the exemplary embodiments may occur to those skilled in the art once they learn of the basic inventive concepts.

## Claims

1. A network apparatus (200) comprising:
a communication unit (210) arranged to perform communication with a plurality of devices (310 - 350) and a user terminal apparatus (100) to control the plurality of devices (310 - 350); and
a controller (220) arranged to:
generate control signals to control the plurality of devices (310 - 350) based on a user command received from the user terminal apparatus (100); and
control the communication unit to transmit the control signals to the plurality of devices (310 - 350);
wherein, if a predetermined control pattern of the user command to sequentially control the plurality of devices (310 - 350) detected (S1220) within a predetermined period of time, the controller (220) is arranged to generate (S1230) and transmit (S1240) macro information corresponding to the detected control pattern to the user terminal apparatus (100).

2. The network apparatus (200) of claim 1, wherein,
after a macro corresponding to the generated macro information is executed according to a user command so that control about the plurality of devices (310 - 350) is performed, if a user command for changing a state of at least one of the plurality of devices (310 - 350) is received, the plurality of devices (310 - 350) are returned to a state that existed before the macro was executed.

3. The network apparatus (200) according to anyone of claim 1 to 2, wherein,
if there is a plurality of macros related to a predetermined device, and the operating time of the predetermined device is overlapped by executing the plurality of macros, the controller (220) is arranged to control the predetermined device to follow a macro that is recently executed or is scheduled to be executed from among the plurality of macros.

4. The network apparatus (200) according to anyone of claim 1 to 3, wherein
the communication unit (210) is arranged to receive at least one of user profile information, information about usage patterns of the user terminal apparatus (100), and information about types of data used through the user terminal apparatus (100); and
wherein the controller (220) is arranged to:
generate macro information for controlling at the same time or sequentially the plurality of devices (310 - 350) based on the received information; and
control to transmit the macro information to the user terminal apparatus (100).

5. The network apparatus (200) of claim 4, wherein
the user profile information comprises gender, age, occupation, and contact of the user.

6. The network apparatus (200) of claim 4, wherein
the controller (220) is arranged to control so that a macro corresponding to the generated macro information is automatically activated based on location information of the user terminal apparatus (100).

7. A network system (1000) comprising:
a network apparatus (200) arranged to, if a predetermined control pattern to sequentially control a plurality of devices (310 - 350) based on a user command received from a user terminal apparatus (100) to control the plurality of devices (310 - 350) is detected within a predetermined period of time, generate (S1230) macro information corresponding to the detected control pattern, and transmit (S1240) the macro information to the user terminal apparatus (100); and
the user terminal apparatus (100) arranged to generate (S1320) and display (S1330) a UI containing the generated macro information based on information received from the network apparatus (200).

8. A control method of a network apparatus (200) comprising:
receiving (S1210) a user command for controlling a plurality of devices (310 - 350) from a user terminal apparatus (100);
generating (S1230), if a predetermined control pattern of the user command to sequentially control the plurality of devices (310 - 350) based on the received user command is detected (S1220) within a predetermined period of time, macro information corresponding to the detected control pattern; and
transmitting (S1240) the generated macro information to the user terminal apparatus (100).

9. The control method of claim 8, further comprising:
returning, if a user command for changing a state of at least one of the plurality of devices (310 - 350) is received after a macro corresponding to the generated macro information according to an user command is executed so that control about the plurality of devices (310 - 350) is performed, the plurality of devices to a state before the macro is executed.

10. The control method of claim 8 or 9, further comprising:
controlling, if there is a plurality of macros related to a predetermined device and operating time of the predetermined device is overlapped by execution of the plurality of macros, the predetermined device to follow a macro which is recently executed or is scheduled to be executed from among the plurality of macros.

## Patentansprüche

1. Netzwerkvorrichtung (200), umfassend:
eine Kommunikationseinheit (210), die für die Durchführung einer Kommunikation mit einer Mehrzahl von Vorrichtungen (310 - 350) und einer Benutzerstationsvorrichtung (100) angeordnet ist, um die Mehrzahl von Vorrichtungen (310 - 350) zu steuern; und
einen Controller (220), der für folgende Zwecke angeordnet ist:
Erzeugen von Steuersignalen zum Steuern der Mehrzahl von Vorrichtungen (310 - 350) auf der Basis eines von der Benutzerstationsvorrichtung (100) empfangenen Benutzerbefehls; und
Steuern der Kommunikationseinheit, so dass diese die Steuersignale an die Mehrzahl von Vorrichtungen (310 - 350) übermittelt;
wobei, wenn ein vorbestimmtes Steuermuster des Benutzerbefehls zur sequentiellen Steuerung der Mehrzahl von Vorrichtungen (310 - 350) innerhalb eines vorbestimmten Zeitraums erkannt wird (S1220), ist der Controller (220) so angeordnet, dass er Makroinformationen gemäß dem erkannten Steuermuster erzeugt (S1230) und an die Benutzerstationsvorrichtung (100) übermittelt (S1240).

2. Netzwerkvorrichtung (200) nach Anspruch 1, wobei
nach Ausführung eines Makros, das den erzeugten Makroinformationen entspricht, gemäß einem Benutzerbefehl, so dass eine Steuerung um die Mehrzahl von Vorrichtungen (310 - 350) ausgeführt wird, wenn ein Benutzerbefehl zum Wechseln eines Zustands mindestens einer der Mehrzahl von Vorrichtungen (310 - 350) empfangen wird, die Mehrzahl von Vorrichtungen (310 - 350) in einen Zustand zurückgeführt wird, der vor Ausführung des Makros bestanden hat.

3. Netzwerkvorrichtung (200) nach Anspruch 1 oder 2, wobei,
wenn mehrere Makros in Bezug auf eine vorbestimmte Vorrichtung vorhanden sind und sich die Betriebszeit der vorbestimmten Vorrichtung mit der Ausführung der mehreren Makros überschneidet, der Controller (220) so angeordnet ist, dass er die vorbestimmte Vorrichtung so steuert, dass sie ein Makro befolgt, das kürzlich ausgeführt worden ist oder dessen Ausführung unter den mehreren Markos geplant ist.

4. Netzwerkvorrichtung (200) nach einem der Ansprüche 1 bis 3, wobei
die Kommunikationseinheit (210) für den Empfang mindestens eines der folgenden angeordnet ist: Benutzerprofilinformationen, Informationen über Nutzungsmuster der Benutzerstationsvorrichtung (100) oder Informationen über die Arten von Daten, die durch die Benutzerstationsvorrichtung (100) verwendet werden; und
wobei der Controller (220) für folgende Zwecke angeordnet ist:
Erzeugen von Makroinformationen zum gleichzeitigen oder sequentiellen Steuern der Mehrzahl von Vorrichtungen (310 - 350) auf der Basis der empfangenen Informationen; und
Steuern zur Übermittlung der Makroinformationen an die Benutzerstationsvorrichtung (100).

5. Netzwerkvorrichtung (200) nach Anspruch 4, wobei
die Benutzerprofilinformationen das Geschlecht, das Alter, den Beruf und die Kontaktdaten des Benutzers umfassen.

6. Netzwerkvorrichtung (200) nach Anspruch 4, wobei
der Controller (220) so angeordnet ist, dass er so steuert, dass ein den erzeugten Makroinformationen entsprechendes Makro auf der Basis von Standortinformationen der Benutzerstationsvorrichtung (100) automatisch aktiviert wird.

7. Netzwerksystem (1000), umfassend:
eine Netzwerkvorrichtung (200), die so angeordnet ist, dass sie, wenn ein vorbestimmtes Steuermuster zur sequentiellen Steuerung einer Mehrzahl von Vorrichtungen (310 - 350) auf der Basis eines von einer Benutzerstationsvorrichtung (100) empfangenen Benutzerbefehls zur Steuerung der Mehrzahl von Vorrichtungen (310 - 350) innerhalb eines vorbestimmten Zeitraums erkannt wird, Makroinformationen gemäß dem erkannten Steuermuster erzeugt (S1230) und die Makroinformationen an die Benutzerstationsvorrichtung (100) übermittelt (S1240); und wobei
die Benutzerstationsvorrichtung (100) so angeordnet ist, dass sie eine Benutzerschnittstelle (UI) erzeugt (S1320) und anzeigt (S1330), welche die erzeugten Makroinformationen enthält, auf der Basis der von der Netzwerkvorrichtungen (200) empfangenen Informationen.

8. Steuerverfahren für eine Netzwerkvorrichtung (200), umfassend:
Empfangen (S1210) eines Benutzerbefehls zum Steuern einer Mehrzahl von Vorrichtungen (310 - 350) von einer Benutzerstationsvorrichtung (100);
Erzeugen (S1230), wenn ein vorbestimmtes Steuermuster des Benutzerbefehls zur sequentiellen Steuerung der Mehrzahl von Vorrichtungen (310 - 350) auf der Basis des empfangenen Benutzerbefehls innerhalb eines vorbestimmten Zeitraums erkannt wird (S1220), von Makroinformationen gemäß dem erkannten Steuermuster; und
Übermitteln (S1240) der erzeugten Makroinformationen an die Benutzerstationsvorrichtung (100).

9. Steuerverfahren nach Anspruch 8, ferner umfassend:
Zurückführen der Mehrzahl von Vorrichtungen in einen Zustand vor der Ausführung des Makros, wenn ein Benutzerbefehl zum Wechseln eines Zustands mindestens einer der Mehrzahl von Vorrichtungen (310 - 350) empfangen wird, nach dem ein Marko ausgeführt worden ist, das den gemäß einem Benutzerbefehl erzeugten Makroinformationen entspricht, so dass eine Steuerung um die Mehrzahl von Vorrichtungen (310 - 350) ausgeführt wird.

10. Steuerverfahren nach Anspruch 8 oder 9, ferner umfassend:
wenn mehrere Makros in Bezug auf eine vorbestimmte Vorrichtung vorhanden sind und sich die Betriebszeit der vorbestimmten Vorrichtung mit der Ausführung der mehreren Makros überschneidet, Steuern der vorbestimmte Vorrichtung, so dass sie ein Makro befolgt, das kürzlich ausgeführt worden ist oder dessen Ausführung unter den mehreren Markos geplant ist.

## Revendications

1. Appareil de réseau (200) comprenant :
une unité de communication (210) conçue pour effectuer une communication avec une pluralité de dispositifs (310 - 350) et un appareil terminal d'utilisateur (100) pour commander la pluralité de dispositifs (310 - 350) ; et
un dispositif de commande (220) conçu pour :
générer des signaux de commande pour commander la pluralité de dispositifs (310 - 350) en fonction d'une commande d'utilisateur reçue de l'appareil terminal d'utilisateur (100) ; et
commander l'unité de communication pour transmettre les signaux de commande à la pluralité de dispositifs (310 - 350) ;
si un modèle de commande prédéfini de la commande d'utilisateur pour commander séquentiellement la pluralité de dispositifs (310 - 350) est détecté (S1220) dans une période de temps prédéfinie, le dispositif de commande (220) étant conçu pour générer (S1230) et transmettre (S1240) des macro-informations correspondant au motif de commande détecté à l'appareil terminal d'utilisateur (100).

2. Appareil de réseau (200) selon la revendication 1,
après qu'une macro correspondant aux macro-informations générées est exécutée selon une commande d'utilisateur de sorte que la commande de la pluralité de dispositifs (310 - 350) soit effectuée, si une commande d'utilisateur pour changer un état d'au moins un dispositif de la pluralité de dispositifs (310 - 350) est reçue, la pluralité de dispositifs (310 - 350) étant ramenés dans un état qui existait avant que la macro soit exécutée.

3. Appareil de réseau (200) selon la revendication 1 ou 2,
s'il y a une pluralité de macros liées à un dispositif prédéfini, et si le temps de fonctionnement du dispositif prédéfini est chevauché par l'exécution de la pluralité de macros, le dispositif de commande (220) étant conçu pour commander le dispositif prédéfini pour suivre une macro qui est récemment exécutée ou dont l'exécution est prévue parmi la pluralité de macros.

4. Appareil de réseau (200) selon l'une quelconque des revendications 1 à 3,
l'unité de communication (210) étant conçue pour recevoir des informations de profil d'utilisateur, des informations sur les modèles d'utilisation de l'appareil terminal d'utilisateur (100), et/ou des informations sur les types de données utilisées par l'appareil terminal d'utilisateur (100) ; et
le système de commande (220) étant conçu pour :
générer des macro-informations pour commander en même temps ou séquentiellement la pluralité de dispositifs (310 - 350) en fonction des informations reçues ; et
transmettre les macro-informations à l'appareil terminal d'utilisateur (100).

5. Appareil de réseau (200) selon la revendication 4,
les informations de profil d'utilisateur comprenant le sexe, l'âge, la profession et le contact de l'utilisateur.

6. Appareil de réseau (200) selon la revendication 4,
le dispositif de commande (220) étant conçu pour commander de sorte qu'une macro correspondant aux macro-informations générées soit automatiquement activée en fonction des informations d'emplacement de l'appareil terminal d'utilisateur (100).

7. Système réseau (1000) comprenant :
un appareil de réseau (200) conçu pour, si un modèle de commande prédéfini pour commander séquentiellement une pluralité de dispositifs (310 - 350) en fonction d'une commande d'utilisateur reçue d'un appareil terminal d'utilisateur (100) pour commander la pluralité de dispositifs (310 - 350) est détecté dans une période de temps prédéfinie, générer (S1230) des macro-informations correspondant au modèle de commande détecté, et transmettre (S1240) les macro-informations à l'appareil terminal d'utilisateur (100) ; et
l'appareil terminal d'utilisateur (100) conçu pour générer (S1320) et afficher (S1330) une IU contenant les macro-informations générées en fonction des informations reçues de l'appareil de réseau (200).

8. Procédé de commande d'un Appareil de réseau (200) comprenant les étapes consistant à :
recevoir (S1210) une commande d'utilisateur pour commander une pluralité de dispositifs (310 - 350) à partir d'un appareil terminal d'utilisateur (100) ;
générer (S1230), si un modèle de commande prédéfini de la commande d'utilisateur pour commander séquentiellement la pluralité de dispositifs (310 - 350) en fonction de la commande d'utilisateur reçue est détecté (S1220) dans une période de temps prédéfinie, des macro-informations correspondant au modèle de commande détecté ; et
transmettre (S1240) les macro-informations générées à l'appareil terminal d'utilisateur (100).

9. Procédé de commande selon la revendication 8, comprenant en outre l'étape consistant à :
ramener, si une commande d'utilisateur pour changer un état d'au moins un dispositif de la pluralité de dispositifs (310 - 350) est reçue après qu'une macro correspondant aux macro-informations générées selon une commande d'utilisateur est exécutée de sorte que le contrôle de la pluralité de dispositifs (310 - 350) soit effectué, la pluralité de dispositifs à un état avant que la macro soit exécutée.

10. Procédé de commande selon la revendication 8 ou 9, comprenant en outre l'étape consistant à :
commander, s'il y a une pluralité de macros liées à un dispositif prédéfini et que le temps de fonctionnement du dispositif prédéfini est chevauché par l'exécution de la pluralité de macros, le dispositif prédéfini pour qu'il suive une macro qui est récemment exécutée ou dont l'exécution est prévue parmi la pluralité de macros.
